# EUROPÄISCHE PATENTSCHRIFT

(11) **EP 1 045 784 B1**
(45) Veröffentlichungstag und Bekanntmachung des Hinweises auf die Patenterteilung: **17.10.2001**
(21) Anmeldenummer: 98945030.9
(22) Anmeldetag: 23.07.1998
(51) Int. Cl.: B60T 8/36, G01L 19/00

(54) **BREMSANLAGE FÜR FAHRZEUGE**
BRAKE SYSTEM FOR VEHICLES
SYSTEME DE FREINAGE POUR VEHICULES

(30) Priorität: 16.12.1997 DE 19755821
(43) Veröffentlichungstag der Anmeldung: 25.10.2000
(73) Patentinhaber: ROBERT BOSCH GMBH, 70442 Stuttgart (DE)
(72) Erfinder: ENGFER, Ortwin, D-70469 Stuttgart (DE); WILDE, Werner, D-71701 Schwieberdingen (DE); KELLER, Herbert, D-75446 Wiernsheim (DE)
(86) Internationale Anmeldenummer: DE9802066
(87) Internationale Veröffentlichungsnummer: WO9930943

(56) Entgegenhaltungen:
- EP-A- 0 105 219
- EP-A- 0 157 944
- WO-A-96/33081
- DE-A- 19 521 832
- US-A- 4 442 716
- PATENT ABSTRACTS OF JAPAN vol. 006, no. 092 (P-119), 29. Mai 1982 -& JP 57 028234 A (NISSAN MOTOR CO LTD), 15. Februar 1982

## Beschreibung

### Stand der Technik

Die Erfindung geht aus von einer Bremsanlage für Fahrzeuge, insbesondere für Kraftfahrzeuge, der im Oberbegriff des Anspruchs 1 definierten Gattung.

Bei einer bekannten Bremsanlage dieser Art (DE 195 21 832 A1) sind die Druckmeßelemente in einer Sensorplatte zusammengefaßt, die mit dem Hydraulikblock mittels durch Schraubenlöcher der Sensorplatte hindurchgesteckter Schrauben verschraubt ist. Die Meßmembranen der einzelnen Druckmeßelemente, die in Verbindung mit den Meßstreifen das Druckmeßelement bilden, werden über je einen Fluidkanal mit Fluid beaufschlagt. Zur Abdichtung ist eine Dichtplatte zwischen der Sensorplatte und dem Hydraulikblock eingelegt. Auf der Oberfläche der Meßmembran sind die Dehnungsmeßstreifen angeordnet, die mit einer Auswerteschaltung elektrisch leitend verbunden sind. Die Auswerteschaltung ist auf einem flachen Doppel-T-förmigen Träger angebracht, der mit geringem Abstand oberhalb der Sensorplatte verlaufend auf dem Hydraulikblock aufgeschraubt ist. Die Auswerteschaltung kann die Widerstandswerte der Dehnungsmeßstreifen aller Druckmeßelemente getrennt auswerten, z.B. im Multiplexbetrieb. Die Auswerteschaltung ist über den Kabelbaum der Fahrzeugelektrik an das Steuergerät angeschlossen.

### Vorteile der Erfindung

Die erfindungsgemäße Bremsanlage mit den Merkmalen des Anspruchs 1 hat den Vorteil, daß durch die Integration von Drucksensor und Steuergerät nur ein einziges Gehäuse erforderlich ist und die elektrische Verbindung zwischen Drucksensor und Steuergerät auf kürzestem Weg und geschützt innerhalb des Gehäuses erfolgen kann. Die elektrische Verbindung zwischen Druckmeßelementen, Signalaufbereitung und Steuergerätrechner kann dabei auf einer Ebene durch Bondverbindungen und Hybridtechnik erfolgen, wodurch eine größere Ausfallsicherheit erzielt wird und weniger Bauteile benötigt werden. Die Montage ist einfach, da das Gehäuse auf den Hydraulikblock nur gefügt, d.h. aufgesteckt und befestigt, wird. Der sonst übliche aufwendige Montageschritt der Verbindung der einzelnen Druckanschlüsse des Drucksensors mit dem Hydraulikblock entfällt, da er bereits beim Fügen sehr einfach mit durchgeführt wird. Durch die durchmesserkleinen Steckrohre der Druckmeßelemente erfolgt die Druckmessung im geraden Kanal und durch den kleinen Rohrdurchmesser entstehen nur geringe Wirbel im durchströmten Kanal, wodurch die Genauigkeit beim Erfassen des ausgesteuerten Bremsdrucks erheblich steigt. Die langen Steckrohre sorgen außerdem für einen Toleranzausgleich quer zur Längsrichtung der Steckrohre beim Fügen von Gehäuse und Hydraulikblock.

Durch die in den weiteren Ansprüchen aufgeführten Maßnahmen sind vorteilhafte Weiterbildungen und Verbesserungen der im Anspruch 1 angegebenen Bremsanlage möglich.

Gemäß einer bevorzugten Ausführungsform der Erfindung sind die Druckmeßelemente nebeneinander auf einem Träger angeordnet und mit jeweils einem das Steckrohr koaxial umgebenden Bund in im Träger ausgebildete Stufenbohrungen eingesetzt. Mittels an der Bundunterseite radial überstehender Verstemmsegmente werden die Druckmeßelemente auf der Unterseite des Trägers in diesen eingestemmt. Durch diese konstruktiven Maßnahmen ist eine einfache Befestigung der Druckmeßelemente durch Verstemmen möglich. Der Bund fixiert jeweils die Druckmeßelemente in ihrer Lage, um die erforderlichen Winkelgenauigkeit zu erlangen. Durch den Hinterschnitt am unteren Ende des Bundes wird verhindert, daß die durch die Verstemmung entstehenden Kräfte in den Bereich der Druckmeßzelle gelangen und das Meßsignal verfälschen.

Gemäß einer vorteilhaften Ausführungsform der Erfindung erfolgt die Abdichtung der in die Fluidkanäle des Hydraulikblocks hineinragenden Steckrohre jeweils mittels zweier auf das Steckrohr aufgeschobener O-Ringe, die beiderseits einer das Steckrohr koaxial umgebenden Stützscheibe angeordnet sind. Diese Doppel-O-Dichtung dient nicht nur der Abdichtung der Fluidkanäle, sondern ermöglicht auch einen Toleranzausgleich in axialer Richtung zwischen Gehäuse und Hydraulikblock beim Fügen dieser beiden Bauteile.

Gemäß einer vorteilhaften Ausführungsform der Erfindung sind in den Hydraulikblock in den Fluidkanälen mündende Stichbohrungen eingebracht, durch die die Enden der Steckrohre hindurchgeführt sind. In die Öffnungen der Stichbohrungen an der Oberfläche des Hydraulikblocks ist jeweils ein Fangtrichter eingesetzt. Dieser Fangtrichter erleichtert das positionsrichtige Einstecken des jeweiligen Steckrohrs in die Fluidkanäle und dient gleichzeitig zur Niederhaltung der Doppel-O-Ringdichtung.

### Zeichnung

Die Erfindung ist anhand eines in der Zeichnung dargestellten Ausführungsbeispiels in der nachfolgenden Beschreibung näher erläutert. Es zeigen:
- Fig. 1: ein Blockschaltbild einer Bremsanlage mit Hydraulikblock und Anbausteuergerät,
- Fig. 2: eine perspektivische Darstellung des Anbausteuergeräts in Fig.1,
- Fig. 3: eine Ansicht des Anbausteuergeräts in Richtung Pfeil III in Fig. 2 bei abgenommenem Deckel,
- Fig. 4: eine Unteransicht des Anbausteuergeräts in Richtung Pfeil IV in Fig. 2,
- Fig. 5: eine perspektivische Darstellung eines Drucksensors im Anbausteuergerät gemäß Fig. 2 - 4,
- Fig. 6: eine Unteransicht des Drucksensors in Richtung Pfeil VI in Fig. 5,
- Fig. 7: einen Schnitt längs der Linie VII- VII in Fig. 6, um 180° gedreht,
- Fig. 8: ausschnittweise einen Längsschnitt von Hydraulikblock und Anbausteuergerät gemäß Schnittlinie VIII-VIII in Fig. 4 oder Fig. 6, letzterer um 90° in Gegenuhrzeigersinn gedreht.

### Beschreibung des Ausführungsbeispiels

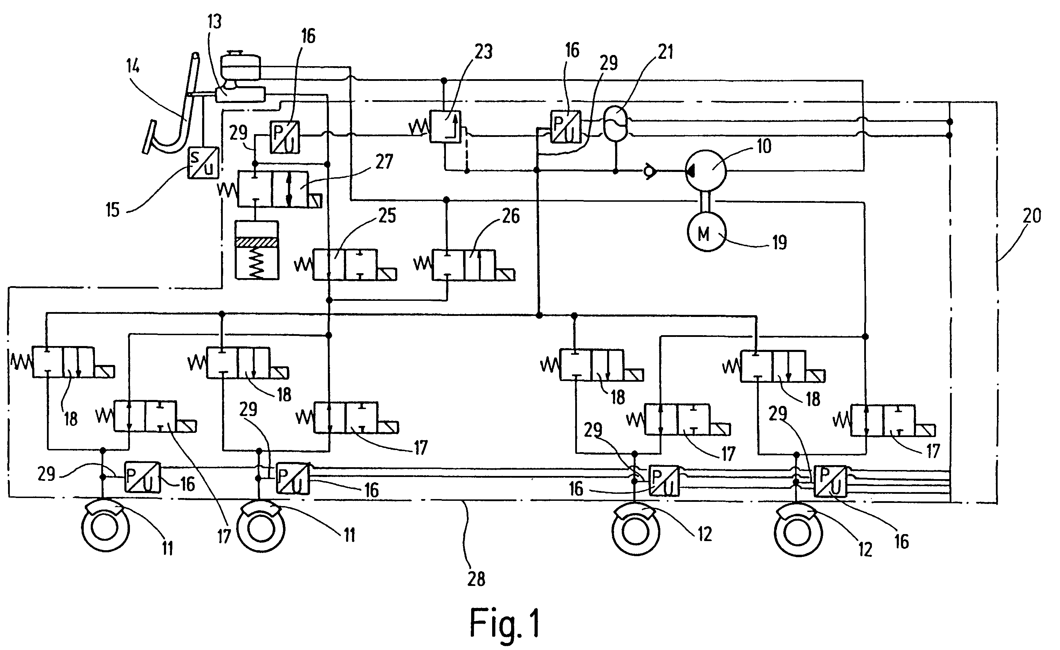

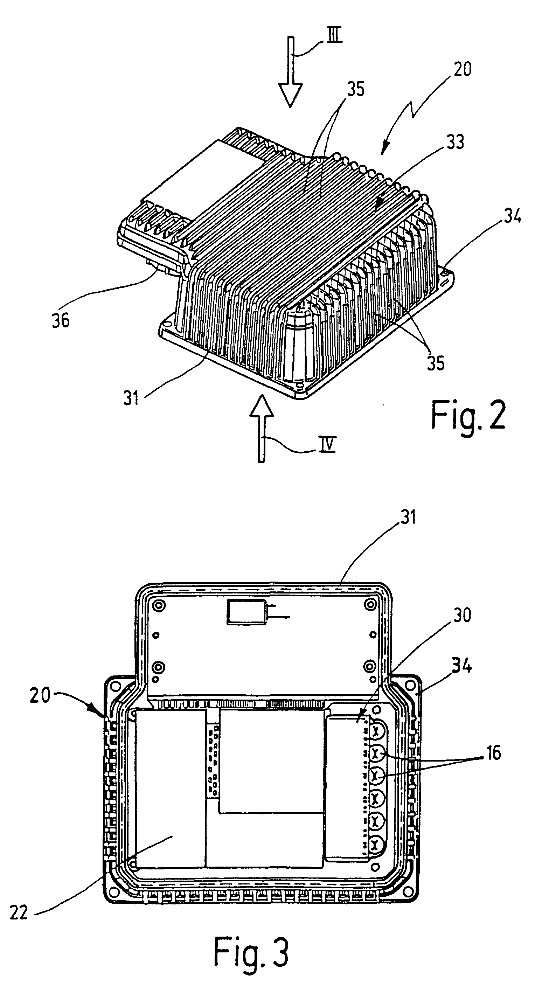

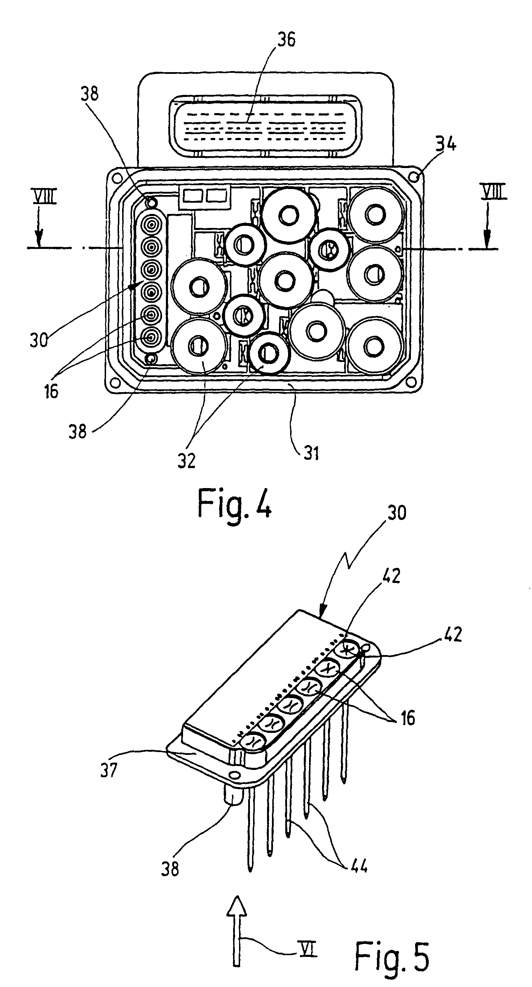

In Fig. 1 ist eine hydraulische Fahrzeugbremsanlage im Blockschaltbild dargestellt, wie sie beispielsweise aus der DE 195 21 832 A1 bekannt ist. Die Fahrzeugbremsanlage weist einander ergänzende Bremssysteme auf, nämlich eine Betriebsbremsanlage, die Bremsflüssigkeitsdruck mittels einer Hydraulikpumpe 10 erzeugt und auf Radbremszylinder 11,12 sämtlicher Fahrzeugräder wirkt, und eine Hilfsbremsanlage, die ihren Bremsflüssigkeitsdruck aus einem pedalbetätigten Hauptbremszylinder 13 bezieht, der nur auf die Radbremszylinder 11 zweier Fahrzeugräder einer Achse wirkt. Jeder Radbremszylinder 11,12 weist ein in der Grundstellung geöffnetes, erstes Absperrventil 17 und ein in der Grundstellung geschlossenes, zweites Absperrventil 18 auf. Bei Betätigung des Bremspedals 14 des Hauptbremszylinders 13 geben ein Pedalstellungssensor 15 und ein Druckmeßelement 16 ein elektrisches Signal an eine in Fig. 3 angedeutete Steuerschaltung 22 in einem Anbausteuergerät 20, die sämtliche Absperrventile 17,18, weitere Absperrventile 25 - 27, sowie einen elektrischen Pumpenmotor 19 steuert. Bei intakter Betriebsbremsanlage werden das Absperrventil 27 geöffnet, die Absperrventile 17 und 25 geschlossen sowie das Absperrventil 26 geöffnet. Die zweiten Absperrventile 18 werden geöffnet und auf diese Weise die Radbremszylinder 11,12 mit Druck aus einem Hydraulikspeicher 21 beaufschlagt, der seinerseits von der Hydraulikpumpe 10 unter Druck gesetzt wird. Der Druck im Hydraulikspeicher 21 wird von einem weiteren Druckmeßelement 16 überwacht. Ein Druckbegrenzungsventil 23 schützt den Hydraulikspeicher 21 vor Überlastung. Bei Erreichen einer Bremsflüssigkeitsdrucks in den Radbremszylindern 11,12, der von dem im Hauptbremszylinder 13 erzeugten Druck abhängig ist, werden die zweiten Absperrventile 18 geschlossen. Die ersten Absperrventile 17 sind, wie erwähnt, geschlossen, damit keine Bremsflüssigkeit durch sie aus den Radbremszylindern 11, 12 während des Bremsens entweichen kann. Der Bremsflüssigkeitsdruck in den Radbremszylindern 11,12 wird mittels weiterer Druckmeßelemente 16 erfaßt. Die Hydraulikpumpe 10, der Hydraulikspeicher 21, das Druckbegrenzungsventil 23 und die Absperrventile 17,18 sind zusammen mit den weiteren Magnetventilen 25 - 27 der Hilfsbremsanlage in einem Hydraulikblock 28 zusammengefaßt, auf dem das Anbausteuergerät 20 aufgesetzt ist. Hydraulikblock 28 und Anbausteuergerät 20 sind in Fig. 1 durch strichpunktierte Umrahmung symbolisiert. Die Druckmeßelemente 16 stehen über Fluidkanäle 29 mit den Hydraulikleitungen im Hydraulikblock 28 in Verbindung und sind in einem Drucksensor 30 (Fig. 5) zusammengefaßt, der zusammen mit der Steuerschaltung 22 für die verschiedenen Stellglieder des Hydraulikblocks 28, wie die als 2/2-Wegemagnetventile ausgebildeten Absperrventile 17,18 und die weiteren Magnetventile 25 - 27, in einem gemeinsamen Gehäuse 31 des Anbausteuergeräts 20 untergebracht ist.

Das Anbausteuergerät 20 ist in Fig. 2 perspektivisch, in Fig. 3 in Draufsicht bei abgenommenen Deckel und in Fig. 4 in Unteransicht dargestellt, wobei in der letztgenannten Darstellung die Magnetspulen 32 der verschiedenen im Hydraulikblock 28 angeordneten Ventile 17,18,25 - 27 zu sehen sind, die ebenfalls im Anbausteuergerät 20 integriert sind. Das Gehäuse 31 ist oberseitig mit einem lösbaren Deckel 33 verschlossen und trägt einen Befestigungsflansch 34, mit dem das Anbausteuergerät 20 auf dem Hydraulikblock 28 verschraubt wird. Gehäuse 31 und Deckel 33 sind auf der Außenseite mit Kühlrippen 35 versehen. Neben der Steuerschaltung 22 und dem Drucksensor 30 ist in dem Gehäuse 31 noch ein Anschlußstecker 36 zum Anschließen des Anbausteuergeräts 20 an die Fahrzeugelektrik vorhanden.

Der in Fig. 5 - 7 dargestellte Drucksensor 30 enthält alle sechs Druckmeßelemente 16 der Bremsanlage in Fig. 1, die nebeneinander auf einem Träger 37 angeordnet sind. Der Träger 37 ist mittels zweier nach unten abstehender Formzapfen 38 in das Gehäuse 31 eingesetzt und darin befestigt, z.B. verschraubt. Abweichend vom Ausführungsbeispiel kann der Träger 37 auch einstückig mit dem Gehäuse 31 ausgebildet sein.

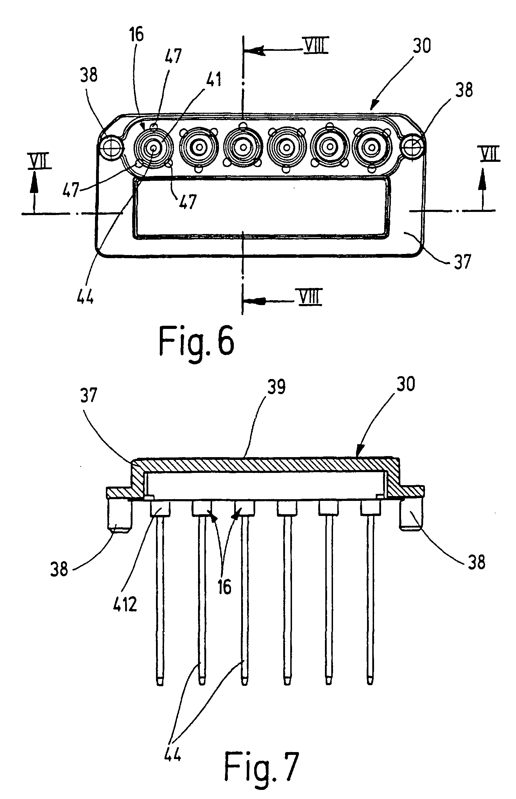

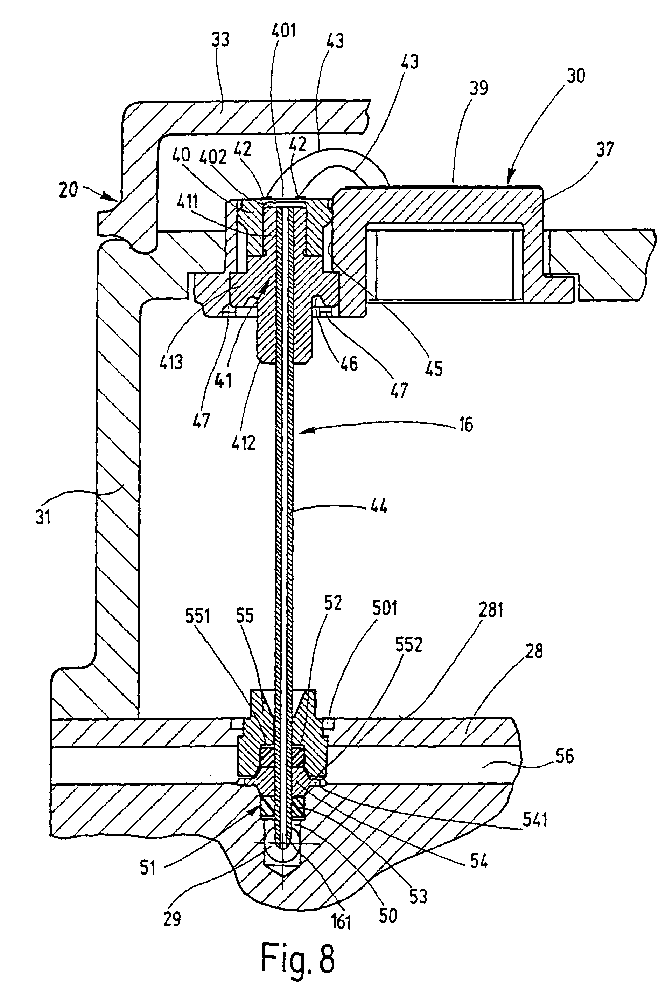

Ein Druckmeßelement 16 ist in Fig. 8 im Längsschnitt dargestellt. Es umfaßt eine kappenartige Meßzelle 40, die auf einem Hohlzapfen 411 eines Trägerkörpers 41 flüssigkeitsdicht aufgesetzt ist und deren Zentrum eine Meßmembran 401 bildet. Auf der Oberseite der Meßzelle 40, und damit auf der Meßmembran 401, sind Dehnmeßstreifen 42 in Dünnschicht-, Dickschicht- oder Folientechnik aufgetragen, die an einer auf der Oberfläche des Trägers 37 angeordneten Auswerteschaltung 39 angeschlossen sind. Die Anschlußdrähte sind in Fig. 8 mit 43 bezeichnet. Insgesamt erfolgt die elektrische Verbindung zwischen den Druckmeßelementen 16 und der Auswerteschaltung 39 sowie der Steuerschaltung 22 und ggf. zwischen Baugruppen der Steuerschaltung 22 auf einer räumlichen Ebene durch Bondverbindungen und Hybridtechnik. Zwischen der Meßmembran 401 der Meßzelle 40 und der ihr zugekehrten Stirnseite des Hohlzapfens 411 verbleibt eine Druckmeßkammer 402, in die hinein ein durchmesserkleines, sehr langes Steckrohr 44 geführt ist, das koaxial im Trägerkörper 41 befestigt ist. Das in seinen Abmessungen optimierte, ca. 60mm lange Steckrohr 44 hat einen Außendurchmesser von 1,6mm und einen Innendurchmesser von 0,63mm und wird an der Unterseite des Trägerkörpers 41 in einem Austrittsabschnitt aus dem Trägerkörper 41 von einem Ringkragen 412 des Trägers 37 umschlossen. Im Mittenbereich zwischen Hohlzapfen 411 und Ringkragen 412 weist der Trägerkörper 41 einen radial vorstehenden Bund 413 auf, mit dem der Trägerkörper 41 in eine Stufenbohrung 45 im Träger 37 eingesetzt ist, wobei sich der Bund 413 an der zwischen den Bohrungsabschnitten ausgebildeten Ringschulter abstützt. Auf der Unterseite des Bunds 413 ist eine umlaufende Hinterschneidung 46 vorgesehen. Wie in Fig. 6 und 8 dargestellt ist, sind an der Unterseite des Bundes 413 drei radial überstehende, gegeneinander um 120° Umfangswinkel versetzte Verstemmsegmente 47 angeordnet, die auf der Unterseite des Trägers 37 in diesen eingestemmt werden (Fig. 8). Beim Verstemmen wird der Trägerkörper 41 am Ringkragen 412 exakt radial ausgerichtet gehalten und dann durch den Bund 413 in seiner Lage fixiert. Die Hinterschneidung 46 verhindert, daß die durch die Verstemmung entstehenden Kräfte in den Bereich der Druckmeßzelle 40 gelangen und das Meßsignal verfälschen.

Fig. 8 zeigt ausschnittweise einen durch ein Dehnungsmeßelement 16 hindurchgehenden Schnitt des Hydraulikblocks 28 und des daran befestigten Anbausteuergeräts 20. Das Druckmeßelement 16 ist in den Träger 37 des Drucksensors 30 eingesetzt, der Träger 37 im Gehäuse 31 befestigt und der Drucksensor 30 von dem Deckel 33 überdeckt. Im Hydraulikblock 28 ist zu jedem zu einem Stellglied führenden Fluidkanal 29 von der dem Anbausteuergerät 20 zugekehrten Oberfläche 281 her eine Stichbohrung 50 eingebracht. Beim Aufsetzen des Anbausteuergeräts 20 auf die Oberfläche 281 des Hydraulikblocks 28 tritt jedes Steckrohr 44 eines Druckmeßelements 16 durch die zugeordnete Stichbohrung 50 hindurch bis in den Fluidkanal 29. Eine vom Steckrohr 44 durchdrungene Dichtung 51 ermöglicht dabei einen Toleranzausgleich in axialer Richtung, so daß der Drucksensor so eingestellt werden kann, daß die Druckmeßelemente 16 auf der Ebene der Steuerschaltung 22 liegen. Ein am freien Steckrohrende ausgebildeter Einsteckkegel 161, dessen Kegelspitze einen Rundnungsradius besitzt, erleichtert dabei das Eindringen in die und das Durchdringen der Dichtung 51. Die Dichtung 51 besteht aus zwei O-Ringen 52,53, die das Steckrohr 44 umfassen und sich auf gegenüberliegenden Seiten an einer das Steckrohr 44 koaxial umgebenden Stützscheibe 54 anlegen. Die Stützscheibe 54 liegt mit einem radial umlaufenden Flansch 541 an einer Ringschulter der als Stufenbohrung ausgeführten Stichbohrung 50 an und wird von einem Fangtrichter 55 niedergehalten, der das Steckrohr 44 umschließt und in die Mündungsöffnung 501 der Stichbohrung 50 eingesetzt und durch Verstemmen am Hydraulikblock 28 gehalten ist. Dabei liegt der O-Ring 52 in einer koaxialen Ausnehmung 551 des Fangtrichters 55 ein, während der O-Ring 53 das Steckrohr 44 gegenüber der Bohrungswand der Stichbohrung 50 abdichtet. Im Bereich der Trennstelle von Stützscheibe 54 und Fangtrichter 55 ist in der Stirnseite des Fangtrichters 55 ein Querschlitz 552 eingeprägt, über welchen im Falle einer Leckage am O-Ring 53 aus der Stichbohrung 50 austretende Bremsflüssigkeit über einen in der Stichbohrung 50 mündenden Entlastungskanal 56 abfließen kann.

## Patentansprüche

1. Bremsanlage für Fahrzeuge, insbesondere für Kraftfahrzeuge, mit in einem Hydraulikblock (28) integrierten, elektrisch gesteuerten, hydraulischen Stellgliedern (17,18,25-27), mit einem Drucksensor (30), der eine Mehrzahl von Druckmeßelementen (16) zur Messung des von den einzelnen Stellgliedern (17,18,25-27) ausgesteuerten Hydraulikdrucks aufweist und mit einer Steuerschaltung (22) zum Steuern der Stellglieder (17,18,25-27), **dadurch gekennzeichnet, daß** Steuerschaltung (22) und Drucksensor (30) in einem gemeinsamen Gehäuse (31) untergebracht sind, an dessen Unterseite die Druckmeßelemente (16) mit durchmesserkleinen Steckrohren (44) vorstehen und daß das Gehäuse (31) unter flüssigkeitsdichtem Einstecken der Steckrohre (44) in im Hydraulikblock (28) vorhandene Fluidkanäle (29) auf den Hydraulikblock (28) aufgesetzt und mit diesem fest verbunden ist.

2. Bremsanlage nach Anspruch 1, **dadurch gekennzeichnet, daß** das Gehäuse (31) auf seiner vom Hydraulikblock (28) abgekehrten Oberseite mittels eines den Zugang zu Steuerschaltung (22) und Drucksensor (30) freigebenden, lösbaren Deckels (33) verschlossen ist.

3. Bremsanlage nach Anspruch 1, **dadurch gekennzeichnet, daß** die Druckmeßelemente (16) nebeneinander auf einem Träger (37) angeordnet, mit jeweils einem das Steckrohr (44) koaxial umgebenden Bund (413) in im Träger (37) ausgebildete Stufenbohrungen (45) eingesetzt und mittels an der Bundunterseite radial überstehender Verstemmsegmente (47) auf der Unterseite des Trägers (37) in diesen eingestemmt sind.

4. Bremsanlage nach Anspruch 3, **dadurch gekennzeichnet, daß** jeder Bund (413) auf seiner Unterseite eine umlaufende Hinterschneidung (46) trägt.

5. Bremsanlage nach Anspruch 3, **dadurch gekennzeichnet, daß** der Träger (37) einstückig mit dem Gehäuse (31) ist.

6. Bremsanlage nach Anspruch 3, **dadurch gekennzeichnet, daß** der Träger (37) ein separates, im Gehäuse (31) befestigtes Bauteil ist.

7. Bremsanlage nach Anspruch 3, **dadurch gekennzeichnet, daß** an der Bundunterseite ein das Steckrohr (44) koaxial umschließender, mit dem Bund (413) einstückiger Ringkragen (412) vorsteht, der zum Halten des Druckelements (16) beim Verstemmen dient.

8. Bremsanlage nach Anspruch 1, **dadurch gekennzeichnet, daß** die Abdichtung der in die Fluidkanäle (29) des Hydraulikblocks (28) hineinragenden Steckrohre (44) der Druckmeßelemente (16) jeweils mittels zweier vom Steckrohr (44) durchdrungener O-Ringe (52,53) vorgenommen ist, die beiderseits einer das Steckrohr (44) koaxial umgebenden Stützscheibe (54) angeordnet sind.

9. Bremsanlage nach Anspruch 8, **dadurch gekennzeichnet, daß** am freien Steckrohrende ein Einsteckkegel (161) ausgebildet ist, dessen Kegelspitze einen Rundungsradius aufweist.

10. Bremsanlage nach Anspruch 1, **dadurch gekennzeichnet, daß** in den Hydraulikblock (28) in den Fluidkanälen (29) mündende Stichbohrungen (50) eingebracht sind, durch die die Enden der Steckrohre (44) der Druckmeßelemente (16) hindurchgeführt sind.

11. Bremsanlage nach Anspruch 10, **dadurch gekennzeichnet, daß** jeweils aus Stützscheibe (54) und O-Ringen (52,53) bestehende Dichtungen (51) in die Stichbohrungen (50) eingesetzt sind.

12. Bremsanlage nach Anspruch 10, **dadurch gekennzeichnet, daß** in die Bohrungsöffnungen (501) der Stichbohrungen (50) an der Oberfläche (281) des Hydraulikblocks (28) jeweils ein das Steckrohr (44) umschließender Fangtrichter (55) eingesetzt ist.

13. Bremsanlage nach Anspruch 11 und 12, **dadurch gekennzeichnet, daß** jeder Fangtrichter (55) so ausgebildet ist, daß er die Dichtung (51) in der Stichbohrung (50) axial unverschieblich festlegt.

14. Bremsanlage nach Anspruch 13, **dadurch gekennzeichnet, daß** die über die O-Ringe (52,53) radial überstehende Stützscheibe (54) von der von der Trichteröffnung abgekehrten Stirnseite des Fangtrichters (55) in der stufig ausgeführten Stichbohrung (50) axial unverschieblich festgelegt ist und daß der eine O-Ring (53) vollständig in der Stichbohrung (50) und der andere O-Ring (52) vollständig in einer zentralen Ausnehmung (551) in der Stirnseite des Fangtrichters (55) einliegt.

15. Bremsanlage nach Anspruch 14, **dadurch gekennzeichnet, daß** im Bereich der Trennstelle von Stützscheibe (54) und Fangtrichter (55) eine Entlastungsbohrung (56) für einen Leckageabfluß mündet und daß in der Stirnseite des Fangtrichters (55) ein zur Entlastungsbohrung (56) verlaufender Querschlitz (552) eingeprägt ist.

16. Bremsanlage nach Anspruch 1, **dadurch gekennzeichnet, daß** die Länge und der Innendurchmesser der Steckrohre (44) hinsichtlich Filterfunktion und Übertragungseigenschaft optimiert sind.

17. Bremsanlage nach Anspruch 16, **dadurch gekennzeichnet, daß** jedes Steckrohr (44) eine Länge von ca. 60mm, einen Innendurchmesser von größer als 0,5mm und einen Außendurchmesser von ca. 1,6mm aufweist.

18. Bremsanlage nach Anspruch 1, **dadurch gekennzeichnet, daß** die elektrische Verbindung zwischen Druckmeßelementen (16) und der Steuerschaltung (22) sowie zwischen Baugruppen der Steuerschaltung (22) auf einer Ebene durch Bondverbindungen und Hybridtechnik vorgenommen ist.

19. Bremsanlage nach Anspruch 8 und 18, **dadurch gekennzeichnet, daß** die Steckrohre (44) eine solche Länge haben, daß die Druckmeßelemente (16) bei in die Fluidkanäle (29) des Hydraulikblocks (28) eintauchenden Steckrohrenden auf der Ebene der Steuerschaltung (22) liegen.

## Claims

1. Brake system for vehicles, in particular for motor vehicles, with electrically controlled hydraulic actuators (17, 18, 25-27) integrated in a hydraulic block (28), with a pressure sensor (30) which has a plurality of pressure-measuring elements (16) for measuring the hydraulic pressure selected by the individual actuators (17, 18, 25-27), and with a control circuit (22) for controlling the actuators (17, 18, 25-27), **characterized in that** the control circuit (22) and the pressure sensor (30) are accommodated in a common housing (31), on the underside of which the pressure-measuring elements (16) project with insertion tubes (44) of small diameter, and **in that**, with the insertion tubes (44) being inserted in a liquid-tight manner into fluid ducts (29) present in the hydraulic block (28), the housing (31) is placed onto the hydraulic block (28) and is firmly connected to the latter.

2. Brake system according to Claim 1, **characterized in that** the housing (31) is closed on its top side facing away from the hydraulic block (28) by means of a releasable lid (33) allowing access to the control circuit (22) and the pressure sensor (30).

3. Brake system according to Claim 1, **characterized in that** the pressure-measuring elements (16) are arranged next to one another on a carrier (37), are inserted, in each case with a flange (413) coaxially surrounding the insertion tube (44), into stepped bores (45) formed in the carrier (37) and are caulked into the carrier (37) on the underside of the latter by means of caulking segments (47) projecting radially on the flange underside.

4. Brake system according to Claim 3, **characterized in that** each flange (413) carries a continuous undercut (46) on its underside.

5. Brake system according to Claim 3, **characterized in that** the carrier (37) is in one piece with the housing (31).

6. Brake system according to Claim 3, **characterized in that** the carrier (37) is a separate component fastened in the housing (31).

7. Brake system according to Claim 3, **characterized in that** an annular collar (412) coaxially surrounding the insertion tube (44) and in one piece with the flange (413) projects on the flange underside and serves for holding the pressure element (16) during caulking.

8. Brake system according to Claim 1, **characterized in that** the insertion tubes (44) of the pressure-measuring elements (16), said insertion tubes projecting into the fluid ducts (29) of a hydraulic block (28), are sealed off in each case by means of two O-rings (52, 53) through which the insertion tube (44) penetrates and which are arranged on both sides of a supporting disc (54) coaxially surrounding the insertion tube (44).

9. Brake system according to Claim 8, **characterized in that** an insertion cone (161), the cone apex of which has a rounding radius, is formed at the free insertion-tube end.

10. Brake system according to Claim 1, **characterized in that** tap bores (50) issuing into the fluid ducts (29) are introduced into the hydraulic block (28), the ends of the insertion tubes (44) of the pressure-measuring elements (16) being led through said tap bores.

11. Brake system according to Claim 10, **characterized in that** seals (51) consisting in each case of a supporting disk (54) and of O-rings (52, 53) are inserted into the tap bores (50).

12. Brake system according to Claim 10, **characterized in that** a catching funnel (55) surrounding the insertion tube (44) is inserted in each case into the bore orifices (501) of the tap bores (50) in the surface (281) of the hydraulic block (28).

13. Brake system according to Claims 11 and 12, **characterized in that** each catching funnel (55) is designed in such a way that it fixes the seal (51) in the tap bore (50) so as to be axially non-displaceable.

14. Brake system according to Claim 13, **characterized in that** the supporting disc (54) projecting radially beyond the O-rings (52, 53) is fixed so as to be axially non-displaceable in the stepped tap bore (50) by that end face of the catching funnel (55) which faces away from the funnel orifice, and **in that** one O-ring (53) is seated completely in the tap bore (50) and the other O-ring (52) is seated completely in a central recess (551) in the end face of the catching funnel (55).

15. Brake system according to Claim 14, **characterized in that** a relief bore (56) for a leakage outflow issues into the region of the separating point of the supporting disc (54) and the catching funnel (55), and **in that** a cross slot (552) running to the relief bore (56) is stamped in the end face of the catching funnel (55).

16. Brake system according to Claim 1, **characterized in that** the length of the inside diameter of the insertion tubes (44) are optimized in terms of filter function and transmission property.

17. Brake system according to Claim 16, **characterized in that** each insertion tube (44) has a length of approximately 60 mm, an inside diameter greater than 0.5 mm and an outside diameter of approximately 1.6 mm.

18. Brake system according to Claim 1, **characterized in that** the electrical connection between the pressure-measuring elements (16) and the control circuit (22) and between subassemblies of the control circuit (22) is made on one plane by means of bond connections and hybrid technology.

19. Brake system according to Claims 8 and 18, **characterized in that** the insertion tubes (44) have a length such that, with the insertion-tube ends penetrating into the fluid ducts (29) of the hydraulic block (28), the pressure-measuring elements (16) lie on the plane of the control circuit (22).

## Revendications

1. Installation de freinage pour véhicules, en particulier pour véhicules à moteur, comprenant des actionneurs (17, 18, 25-27) hydrauliques à commande électrique, intégrés dans un bloc hydraulique (28), un capteur de pression (30) comportant plusieurs manomètres (16) pour la mesure de la pression hydraulique des différents actionneurs (17, 18, 25-27), et un circuit de commande (22) pour la commande des actionneurs (17, 18, 25-27),
**caractérisée en ce que**
le circuit de commande (22) et le capteur de pression (30) sont montés dans un boîtier commun (31), dont la face inférieure porte en saillie les manomètres (16) avec des tubes plongeurs (44) de diamètre inférieur, et le boîtier (31) est monté sur le bloc hydraulique (28) et fixé sur lui par une introduction étanche des tubes plongeurs (44) dans des canalisations de fluide (29) dans le bloc hydraulique (28).

2. Installation de freinage selon la revendication 1,
**caractérisée en ce que**
le boîtier (31) est fermé à sa partie supérieure opposée au bloc hydraulique (28) par un couvercle amovible (33) permettant l'accès au circuit de commande (22) et au capteur (30).

3. Installation de freinage selon la revendication 1,
**caractérisée en ce que**
les manomètres (16) sont montés sur un support (37) les uns à côté des autres et introduits dans des perçages étagés (45) formés dans le support (37) avec chaque fois un collet coaxial (413) entourant le tube plongeur (44), et emboîtés dans le support (37) au moyen de segments de matage (47) dépassant radialement de la face inférieure du support sur la face inférieure du collet.

4. Installation de freinage selon la revendication 3,
**caractérisée en ce que**
chaque collet (413) présente sur sa face inférieure une contre-dépouille périphérique (46).

5. Installation de freinage selon la revendication 3,
**caractérisée en ce que**
le support (37) est d'une seule pièce avec le carter (31).

6. Installation de freinage selon la revendication 3,
**caractérisée en ce que**
le support (37) est une pièce fixée séparément dans le boîtier (31).

7. Installation de freinage selon la revendication 3,
**caractérisée en ce que**
dépassant sur la face interne du collet, un bossage annulaire (412) d'une seule pièce avec le collet (413), entoure coaxialement le tube plongeur (44), et sert à maintenir les manomètres (16) par matage.

8. Installation de freinage selon la revendication 1,
**caractérisée en ce que**
l'étanchéité des tubes plongeurs (44) appartenant aux manomètres (16), et plongeant dans les canalisations de fluide (29) du bloc hydraulique (28) est réalisée respectivement par deux joints toriques (52, 53) traversés par un tube plongeur (44), disposés des deux côtés d'une rondelle d'appui (54) entourant le tube plongeur (44) d'une façon coaxiale.

9. Installation de freinage selon la revendication 8,
**caractérisée en ce que**
l'extrémité libre du tube plongeur est formée d'un cône de pénétration (161) dont la pointe est arrondie.

10. Installation de freinage selon la revendication 1,
**caractérisée en ce que**
le bloc hydraulique (28) comporte des trous borgnes (50) débouchant dans les canalisations de fluides (29) et à travers lesquels sont dirigées les extrémités des tubes plongeurs (44) des manomètres (16).

11. Installation de freinage selon la revendication 10,
**caractérisée en ce que**
chaque étanchéités (51) formée par les rondelles d'appui (54) et par les joints toriques (52, 53) est introduite dans les trous borgnes (50).

12. Installation de freinage selon la revendication 10,
**caractérisée en ce que**
dans chaque orifice (501) des trous borgnes (50) est placé un entonnoir de réception (55) entourant le tube plongeur (44).

13. Installation de freinage selon les revendications 11 et 12,
**caractérisée en ce que**
chaque entonnoir (55) est conçu pour maintenir sans déplacement possible en position axiale, l'étanchéité (51) dans le trou borgne (50).

14. Installation de freinage selon la revendication 13,
**caractérisée en ce que**
la rondelle d'appui (54) dépassant en direction radiale au-delà des joints toriques (52, 53) est fixée sans déplacement axial possible par la face frontale opposée à l'ouverture de l'entonnoir (55) dans le trou borgne étagé (50), et l'un des joints toriques (53) est totalement encastré dans le trou borgne (50) et l'autre joint torique (52) est totalement encastré dans une cavité (551) dans la face frontale de l'entonnoir (55).

15. Installation de freinage selon la revendication 14,
**caractérisée en ce que**
dans la zone séparant la rondelle d'appui (54) de l'entonnoir (55), débouche un orifice de décharge (56) pour un écoulement de fuite, et dans la face frontale de l'entonnoir (55) est formée une rainure transversale (552) débouchant dans l'orifice de décharge (56).

16. Installation de freinage selon la revendication 1,
**caractérisée en ce que**
la longueur et le diamètre intérieur des tubes plongeurs (44) sont optimisés en vue de leur fonction de filtration et de leur capacité de transmission de l'information.

17. Installation de freinage selon la revendication 16,
**caractérisée en ce que**
tous les tubes plongeurs ont une longueur d'environ 60 mm, un diamètre intérieur supérieur à 0,5 mm et un diamètre extérieur d'environ 1,6 mm.

18. Installation de freinage selon la revendication 1,
**caractérisée en ce que**
la liaison électrique entre les manomètres (16) et le circuit de commande (22) ainsi qu'entre les différents sous-ensembles du circuit de commande est disposée sur une surface plane par des liaisons bondérisées et la technique hybride.

19. Installation de freinage selon les revendications 8 et 18,
**caractérisée en ce que**
les tubes plongeurs (44) ont une longueur telle que, lorsque les extrémités des tubes plongent dans les canalisations de fluide (29) du bloc hydraulique (28), les manomètres (16) sont disposés dans le plan du circuit (22).
